# EUROPEAN PATENT APPLICATION

(11) **EP 3 155 886 A1**
(43) Date of publication of application: **19.04.2017**
(21) Application number: 16192769.4
(22) Date of filing: 07.10.2016
(51) Int. Cl.: A01B 59/06, A01B 63/10

(54) **HITCH SYSTEM**

(30) Priority: 09.10.2015 US 201562239332 P
(71) Applicant: Agco Corporation, Duluth, Georgia 30096 (US)
(72) Inventor: SMITH, Evan Thomas, Hesston, KS 67062-2094 (US)
(74) Representative: AGCO Intellectual Property Department

(57) **Abstract**

In one embodiment, a hitch system, comprising: an upper support structure comprising a first pivot mount at one end of the upper support structure and a second pivot mount at the other end of the upper support structure; a lower structural assembly comprising a base having a third pivot mount at one end of the base and a fourth pivot mount at the other end of the base, the lower structural assembly further comprising first and second lift arms pivotably connected respectively to the third and fourth pivot mounts; and first and second actuators each comprising a retractable member and independently operable, the first actuator pivotably connected at one end of the first actuator to the first pivot mount and pivotably connected at the other end of the first actuator to the first lift arm, the second actuator pivotably connected at one end of the second actuator to the second pivot mount and pivotably connected at the other end of the second actuator to the second lift arm.

## Description

### TECHNICAL FIELD

The present disclosure is generally related to hitches for work machines and, more particularly, 3-point hitches for work machines.

### BACKGROUND

Hitches are used extensively with work machines (e.g., mobile power unit or vehicle, such as an agricultural or construction vehicle) to attach implements to the rear or front of the work machine. The implement enables the work machine to perform one of a variety of functions, such as to plow snow, lift loads of soil or rock, tow sprayers or seeders, among other functions. Three-point (hereinafter, 3-point) hitch systems are commonly used in the agricultural and construction industries, and provide a connection between the work machine and an implement that requires or uses movement provided by the work machine. Generally, a 3-point hitch system comprises a shaft or substructure used to connect two lift arms that are rotated about the shaft via input from hydraulic cylinders. Lift links or rock shafts are then used to connect those two lift arms to an upper structure.

### BRIEF DESCRIPTION OF THE DRAWINGS

Many aspects of a hitch system can be better understood with reference to the following drawings. The components in the drawings are not necessarily to scale, emphasis instead being placed upon clearly illustrating the principles of certain embodiments of the hitch system. Moreover, in the drawings, like reference numerals designate corresponding parts throughout the several views.
FIG. 1 is a schematic diagram that illustrates, in partial, rear-side perspective view, an example work machine with an implement connected thereto via an embodiment of an example hitch system.
FIG. 2 is a schematic diagram that illustrates, in partial, rear perspective view, the work machine and the example hitch system of FIG. 1 without the implement.
FIG. 3A is a schematic diagram that illustrates an embodiment of an example hitch system in a raised position.
FIG. 3B is a schematic diagram that illustrates an embodiment of an example hitch system in a lowered position.
FIG. 4 is a schematic diagram that illustrates an embodiment of at least a portion of an example hitch control system.
FIG. 5 is a block diagram of an embodiment of an example electronic control unit used in the example hitch control system of FIG. 4.
FIG. 6 is a flow diagram that illustrates an embodiment of an example hitch control method.

### DESCRIPTION OF EXAMPLE EMBODIMENTS

### Overview

In one embodiment, a hitch system, comprising: an upper support structure comprising a first pivot mount at one end of the upper support structure and a second pivot mount at the other end of the upper support structure; a lower structural assembly comprising a base having a third pivot mount at one end of the base and a fourth pivot mount at the other end of the base, the lower structural assembly further comprising first and second lift arms pivotably connected respectively to the third and fourth pivot mounts; and first and second actuators each comprising a retractable member and independently operable, the first actuator pivotably connected at one end of the first actuator to the first pivot mount and pivotably connected at the other end of the first actuator to the first lift arm, the second actuator pivotably connected at one end of the second actuator to the second pivot mount and pivotably connected at the other end of the second actuator to the second lift arm.

### Detailed Description

Certain embodiments of a hitch assembly or system, and corresponding hitch control system and method, are disclosed that provide a rock-shaft-less (or lift-link-less) connection between a work machine, such as a mobile power unit or vehicle, and an implement that requires or uses movement (such as a rotational movement generated by a power takeoff (PTO) of the work machine, linear (traversal) movement of the work machine, among movement generated via other means) of the work machine. In one embodiment, the hitch system comprises a 3-point hitch assembly or system that comprises a pair of independently operable lift arms that have a height that is independently adjusted (e.g., via an electronic control unit) based on operator and sensor input and actuators associated with the pair of lift arms, thus negating the need for rock shafts or rock shaft arms or link lifts.

Digressing briefly, 3-point hitch systems generally make use of rock shafts/lift links to, among other purposes, ensure stability during uneven loading of the hitch assembly. There are many situations that may cause the load on a 3-point hitch system to be uneven (e.g., side-to-side). For instance, in the agricultural industry, several agricultural implements are offset from the centerline of the tractor, which may cause uneven loading. Also, implements engaged with the ground, traveling across uneven terrain, or shifting loads, may cause uneven loads that impact the hitch. Generally, if hydraulic cylinders are connected in parallel, an uneven load may cause the lower arms to move to different heights, which if unintended, can cause binding, unwanted hitch motion, and overall undesirable hitch performance and vehicle instability. Linkages such as rock shafts and lift links address these issues by providing an assembly or substructure that rotates at the upper fixing point of the vehicle, yet at the cost of increased linkage parts and added potential points of wear and/or failure. Additional and/or other measures include the use of lower link arms that are rigidly connected, which provides a lower cost alternative to rock shaft/lift link combinations, but does not provide for the capability of differing heights between lift arms (e.g., when requested). By providing stability via electronic control that independently adjusts the lift arms (e.g., to have a level height or uneven height, depending on operator input) while maintaining a fixed upper connection point of the hitch, a hitch system as disclosed herein reduces linkage parts while enabling stable hitch control.

Having summarized certain features of a hitch system (which in some embodiments includes a hitch control system and corresponding method), reference will now be made in detail to the description of certain embodiments of hitch systems as illustrated in the drawings. While embodiments of a hitch system will be described in connection with these drawings, there is no intent to limit it to the embodiment or embodiments disclosed herein. For instance, though emphasis is placed on a work machine embodied as an agricultural machine with a rear-coupled implement, certain embodiments of a hitch system (or the principles thereof) may be beneficially deployed in other machines (in the same or other industries, such as the construction or municipal industries) where a hitch is used to coupled an implement to the front or rear of the work machine. Also, a hitch system is illustrated in the accompanying figures using two yokes to allow multidirectional rotation, though in some embodiments, spherical ball joints may be used. Further, although the description identifies or describes specifics of one or more embodiments, such specifics are not necessarily part of every embodiment, nor are all of any various stated advantages necessarily associated with a single embodiment. On the contrary, the intent is to cover all alternatives, modifications and equivalents included within the spirit and scope of the disclosure as defined by the appended claims. Further, it should be appreciated in the context of the present disclosure that the claims are not necessarily limited to the particular embodiments set out in the description. In some embodiments, features described for one embodiment may be combined with features of another embodiment.

Note that references hereinafter made to certain directions, such as, for example, "front", "rear", "left" and "right", are made as viewed from the rear of the work machine looking forwardly.

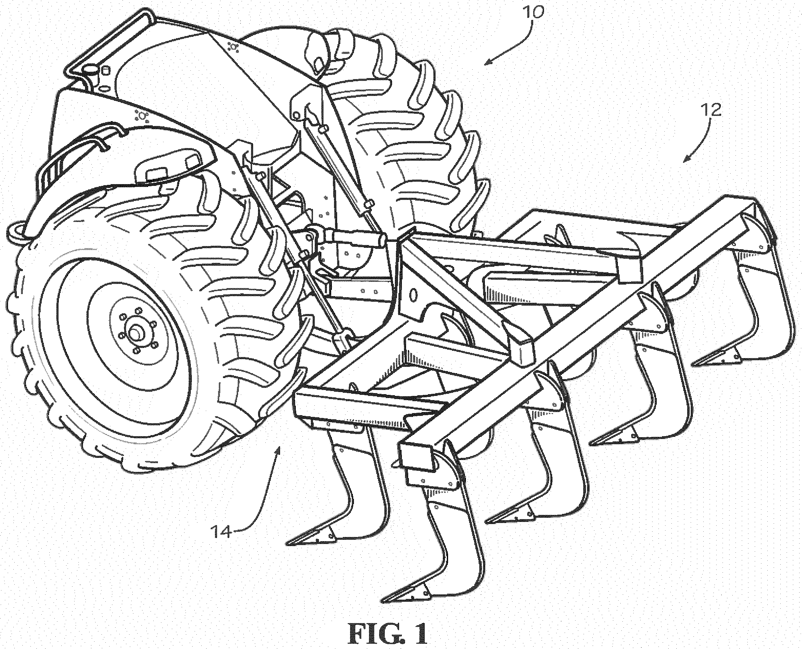

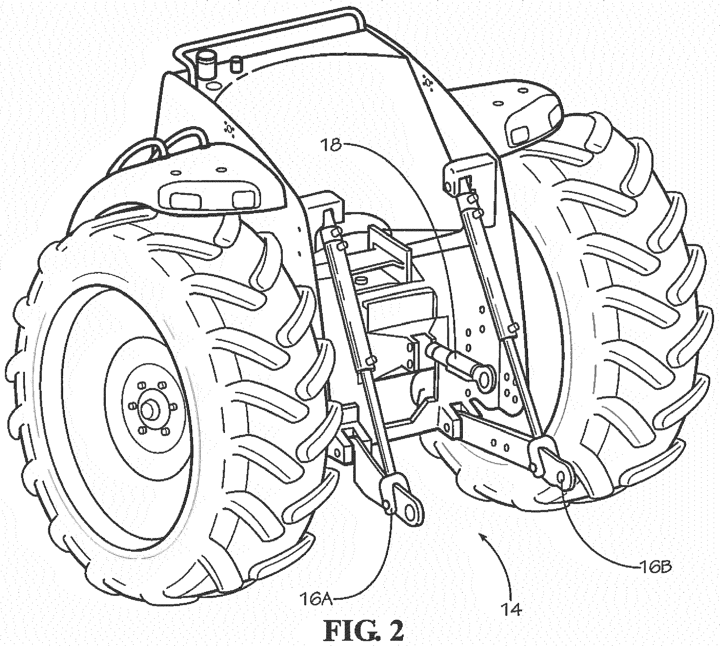

Reference is made to FIG. 1, which partially illustrates a rear end of an example work machine 10 embodied as a tractor that is coupled to an implement 12 via a hitch system 14. One having ordinary skill in the art should appreciate in the context of the present disclosure that a tractor is one example of a work machine 10, and that other power-sourcing, mobile machines (in the agricultural industry or other industries) may be used. Also, although shown as a rear-mounted implement 12 (e.g., a tiller), in some embodiments, other types of rear-mounted, or front-mounted, implements may be used and hence are contemplated to be within the scope of the disclosure. In the depicted embodiment, the hitch system 14 mounts to the rear of the work machine 10 via top and lower structures secured to the frame/chassis of the work machine 10, and as further shown in FIG. 2 (without the implement 12), attaches to the implement 12 via a pair of lift arms 16A and 16B and an optional center link 18 that supplements movement of the pair of lift arms 16A and 16B. For instance, the center link 18 provides added stabilization, such as when the implement 12 is lifted from the ground. In some embodiments, the center link 18 may be omitted.

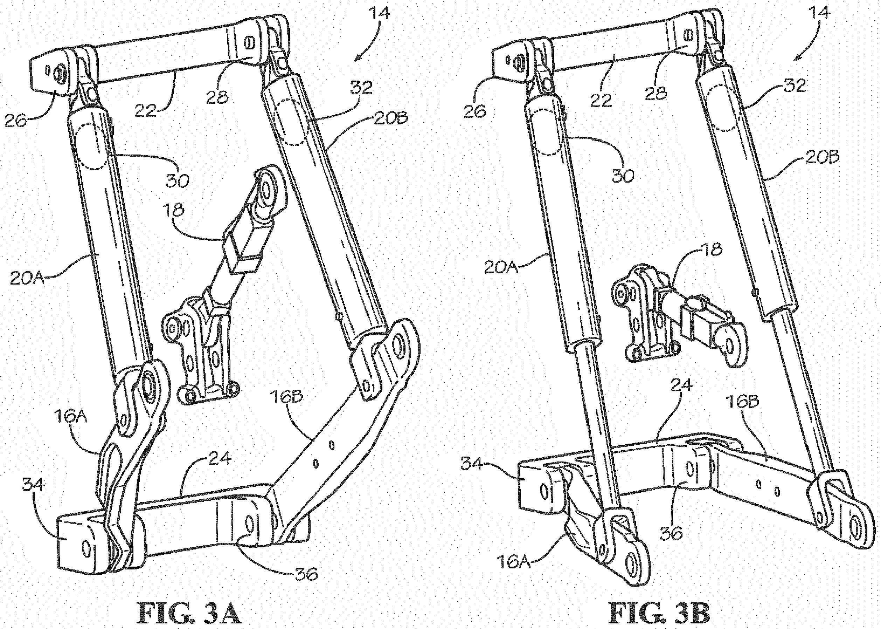

Referring now to FIGS. 3A-3B, shown are schematic diagrams that illustrate an embodiment of the example hitch system 14 in raised (FIG. 3A) and lowered (FIG. 3B) positions. It should be appreciated by one having ordinary skill in the art in the context of the present disclosure that the hitch system 14 depicted in FIGS. 3A-3B is illustrative of one example embodiment, and that in some embodiments, variations in the structure that provide the same or similar functionality while reducing the quantity of linkages are contemplated to be within the scope of the disclosure. The hitch system 14 is based on a 3-point hitch linkage system, and uses actuators 20 (e.g., 20A, 20B) to provide rotational movement of the pair of lift arms 16 (e.g., 16A, 16B). The actuators 20 may be embodied as hydraulic cylinders with a retractable member embodied as a piston/rod assembly, electric actuators with a retractable member embodied as a screw, among other types of actuators. Stated otherwise, the actuators 20 may be fluid actuated (e.g., fluid comprising air or liquid), such as a hydraulic cylinder that uses hydraulic fluid, or electrically actuated. In one embodiment, the actuators 20 are double-acting, which generally provides for stability and hence safer operation compared to a single-acting mechanisms.

As shown, the hitch system 14 comprises an upper support structure 22 to which the actuators 20 are pivotably coupled, and a lower support structure 24. The pair of lift arms 16 are pivotably coupled to the lower support structure 24 and also pivotably coupled to the actuators 20. Thus, in general, one end of each of the actuators 20A and 20B are coupled respectively to the lift arms 16A and 16B through a single axis rotational joint, and the other end of the each of the actuators 20A and 20B is coupled to the upper support structure 22 (e.g., the latter serving as a three-dimensional joint and enabling a pivoting motion about a respective single point).

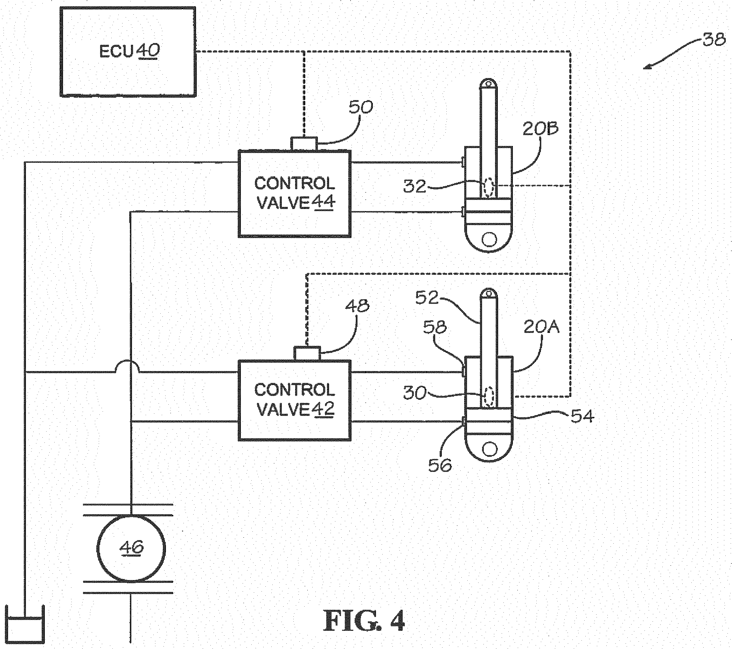

Explaining further, and in one embodiment, the upper support structure 22 is fixed to the frame/chassis of the work machine 10 (FIG. 1), and comprises a metal (or other rigid, sturdy material) beam or frame with pivot mounts 26, 28 on opposing ends of the structure 22. In some embodiments, the pivot mounts 26, 28 may include clevises, trunnion mounts, spherical bearings, among other attachment mechanisms to enable pivoting motion of each actuator 20A, 20B about a respective pivot point of the upper support structure 22. The actuator 20A, depicted as a hydraulic cylinder in this example, is pivotably connected at one end to the pivot mount 26, and the actuator 20B, also depicted in this example as a hydraulic cylinder, is pivotably connected at one end to the pivot mount 28. The actuators 20 each comprises a retractable member (e.g., for the hydraulic cylinder, a piston/rod assembly, best shown in FIGS. 3B and 4) that causes the raising (FIG. 3A) and lowering (FIG. 3B) of the hitch (e.g., through the retraction and extension, respectively, of the rod relative to the cylinder housing or barrel based on pressure differentials across the piston and rod within the housing).

In one embodiment, sensors 30, 32 (shown schematically as dotted ellipses on the cylinder housing of each actuator 20A, 20B, merely signifying residence internal to the cylinder housing) are used to provide feedback to an electronic control unit of an absolute or relative current position of the piston. The sensors 30, 32 may be magnetic positional sensors integrated within the actuators 20A, 20B, detecting the position of the piston of each actuator 20. In some embodiments, sensors may be located elsewhere (e.g., external to the actuators 20), such as coupled to each of the lift arms 16A, 16B to detect a position (e.g., via a change in resistance) of the rod portion of the actuator relative to the end of the cylinder housing or other datum point. In some embodiments, other types of sensors may be used, such as optical, acoustic, or capacitive sensors.

The actuators 20 are each pivotably coupled at the other end (e.g., the rod end) proximal to a distal end of each respective lift arm 16 (e.g., actuator 20A to lift arm 16A, actuator 20B to lift arm 16B). The lift arms 16 in turn are each pivotably coupled to the lower support structure 24. In one embodiment, the lower support structure 24 is fixed to the frame of the work machine 10 (FIG. 1), and comprises a metal (or other rigid, sturdy material) base, beam, or frame (base, beam, or frame used interchangeably for the lower support structure 24) with pivot mounts 34, 36 on opposing ends of the structure 24. In some embodiments, the pivot mounts 34, 36 may include clevises, trunnion mounts, or spherical bearings, among other attachment mechanisms to enable independent, pivoting motion for the lift arms 16. In one embodiment, the combination of the lower support structure 24 and lift arms 16A and 16B is referred to as a draft arm assembly or a lower structural assembly. It is noteworthy that the hitch system 14 eliminates the need for a rock shaft, rock shaft arms, and lift links, since the actuators 20 are used in place of the previously used linkage parts. For instance, because the actuators 20 are linearly powered, the upper connection points can be fixed instead of mounting to a pivoting rock shaft and rock shaft arms.

Also shown in FIGS. 3A-3B is the optional center link 18 in the raised (e.g., FIG. 3A) and lowered (e.g., FIG. 3B) positions, as described previously.

Having described certain features of an embodiment of a hitch system 14 and an example environment in which the hitch system 14 may be deployed, attention is directed to FIG. 4, which illustrates an embodiment of at least a portion of an example hitch control system 38. It should be appreciated by one having ordinary skill in the art in the context of the present disclosure that the hitch control system 38 is merely illustrative of one example embodiment, and that variations that provide the same or similar function are contemplated to be within the scope of the disclosure. Further, in some embodiments, the hitch control system 38 may comprise fewer components or additional components. The hitch control system 38 comprises an electronic control unit 40, control valves 42 and 44 (e.g., multi-position, electrically-actuable valves), the actuators 20 (20A, 20B), and the sensors 30, 32. Digressing briefly, and in general (and not intended to be limited to this example of operation), an engine of the work machine 10 (FIG. 1) is coupled to a pump drive gearbox, which in turn is coupled to a hydraulic pump 46. In some implementations, the pump 46 may be directly coupled to the engine or indirectly via a belt, pulley, chains, etc. The pump drive gearbox uses the power of the engine to drive the hydraulic pump 46. In one embodiment, the pump 46 provides for pressurized, hydraulic fluid flow to the control valves 42, 44, which in turn independently control the flow of hydraulic fluid to the respective actuators 20A, 20B (e.g., hydraulic cylinders in the depicted embodiment) via a fluid conduit(s), such as hoses, tubing, etc. The flow of fluid (e.g., hydraulic fluid in this example) throughout the hitch control system 38 is indicated by solid lines, where a fluid circuit comprises the pump 46, the control valves 42,44, the actuators 20A, 20B (ingress and egress via the ports of the actuators 20A, 20B), and a reservoir. Electronic control of the hitch control system 38 involves the electronic control unit 40, valve actuators 48 and 50, and the sensors 30, 32, with communication among the electronic control components represented by the dashed line in FIG. 4. Note that the communication medium may comprise a wired medium, such as multiple independent (e.g., twisted pair) wiring of a wiring harness according to a logical CAN bus configuration (e.g., CAN ISO11998, ISO 11783, etc.), wherein the connected components are nodes (e.g., addressable, such as via J1939 or other mechanisms) along the bus. It should be appreciated by one having ordinary skill in the art that other forms of communication may be used in some embodiments, such as an arrangement complying with RS232, among others well known to those having ordinary skill in the art. In some embodiments, communication among electronic components may be achieved over a wireless medium (e.g., using near field communications (NFC), Bluetooth, or wireless local area network, among other protocols and/or standards, such as via IEEE 802.11, optical, acoustic, etc.). In some embodiments, a combination of wired and wireless communication among the components of FIG. 4 may be used. Note that in some embodiments, one of a plurality of different forms of control may be implemented, such as electronic, pneumatic, or hydraulic control, or a combination thereof (e.g., a hybrid form of control, such as electro-hydraulic).

Certain embodiments of the hitch control system 38 make use of the double acting actuators 20 and electronic position sensors 30, 32. To keep the pair of lower lift arms 16 of the 3-point hitch system 14 at the same level horizontally (e.g., if requested by an operator) without utilizing a rock shaft arm, for instance, the sensors 30, 32 feed information (e.g., relative or absolute position information via a signal(s)) to the electronic control unit 40. Each actuator 20A, 20B is connected to the separate respective control valve 42, 44. The electronic control unit 40 uses the information from the sensors 30, 32 and operator input to signal one or a combination of the valve actuators 48, 50 (e.g., a solenoid or other type of valve actuator), which in turn regulates the flow of hydraulic fluid through the bodies of the one or combination of control valves 42, 44. For instance, each control valve 42, 44 comprises an internal spool or poppet, and the valve actuators 48, 50 are used to actuate the spool or poppet. The control valves 42, 44 receive the pressurized fluid flow from the discharge of the pump 46, and control the manner of hydraulic fluid flow into and out of the actuators 20 based on the spool position of the control valves 42 and/or 44. Signaling from the electronic control unit 40 to either or both of the valve actuators 48, 50 causes movement of the respective spool or poppet in known manner, which in turn causes a change in hydraulic fluid flow therein. The change in flow through the control valves 42, 44 in turn regulates whether fluid is allowed to pass to the respective actuator 20A, 20B, and/or the amount and/or direction of flow of hydraulic fluid through the actuators 20A, 20B, respectively. Flow regulation through the actuators 20 results in actuation of the piston/rod assembly (e.g., a change in stroke) of the actuators 20 to keep the lift arms 16 at the same or substantially the same height (or in implementations where a difference in height is desired, to the operator-requested height).

For instance, for embodiments where the actuators 20 comprise hydraulic cylinders, as is known, a hydraulic cylinder (using actuator 20A as an example) comprises a cylinder barrel (housing) that houses a rod 52 and piston 54 assembly (collectively referred to as a retractable member) and comprises inlet and outlet ports 56, 58 (where the direction of the flow into or out of each of the ports 56, 58 depends on the position of the multi-position control valve 42). The cylinder barrel is closed on one end (cap end), and open on the other end (head end) to permit the rod 52 to slide in and out of the cylinder barrel. As is know, the rod 52 and the piston 54 assembly move due to the applied force (e.g., which is a function of the pressure and area differentials on both sides of the piston 54) on the piston 54 and the amount of the flow that is directed to the hydraulic cylinder 20A. For instance, due to differences in the area on the sides of the piston 54, the hydraulic fluid flow directed to the head end generates a higher speed of the piston 54 than the same amount of hydraulic fluid directed to the cap end of the piston 54. For the same pressure of the hydraulic fluid, higher force is generated on the cap end than on the head end due to a larger area of the piston 54 on the cap end. Thus, the speed of the piston 54 depends on the flow rate and the effective area of the piston 54. The force generated by the piston 54 depends on both the pressure difference on both sides of the piston 54 and the difference in effective area on each side of the piston 54. The hydraulic fluid flow to and out of the hydraulic cylinder 20A is controlled by the control valve 42. The pressure in the cylinder chamber(s) is dependent on one or more parameters such as external load applied to the rod, inertia loads of the piston/rod assembly, the amount of flow directed by the control valve 42, among other factors.

In general, the rod 52 and piston 54 assembly move (e.g., extending the rod 52 past the head end of the cylinder barrel of the hydraulic cylinder 20A, or retracting the rod 52 to further within the cylinder barrel of the hydraulic cylinder 20A). The rod 52 of the hydraulic cylinder 20A couples to the lift arm 16A, and the cap end of the hydraulic cylinder 20A couples to the upper support structure 22, as described above. In effect, feedback from the sensors 30, 32 of the position of the stroke of the actuators 20 is processed by the electronic control unit 40 to determine the corresponding height for each lift arm 16, and used for comparison with the requested height (based on operator input) to signal one or a combination of the valve actuators 48, 50 to control fluid flow in a manner that results in the requested height of the lift arms 16. Note that operator input is via an interface (e.g., user interface of or in communication with the electronic control unit 40), enabling the raising or lowering of the lift arms 16.

Additionally, it is noted that although a single electronic control unit 40 and two sensors 30, 32 are described, it should be appreciated by one having ordinary skill in the art in the context of the present disclosure that additional components (e.g., additional electronic control units and/or additional sensors) may be used in some embodiments, and in general, in some embodiments, additional or fewer components than those depicted in FIG. 4 may be used.

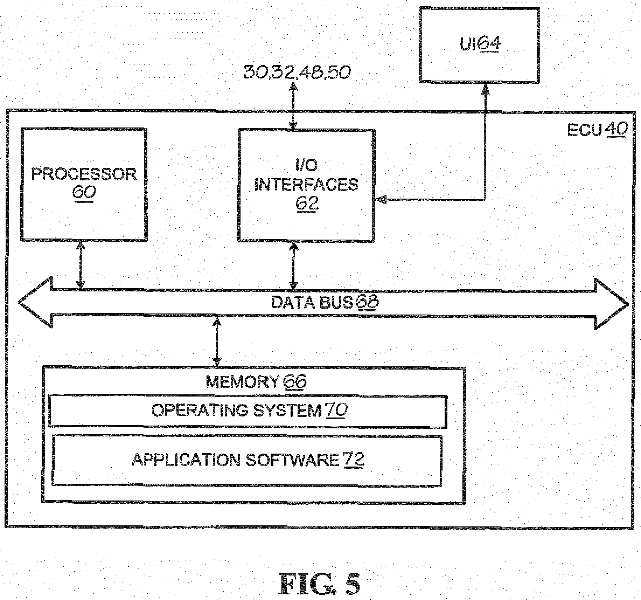

Referring now to FIG. 5, depicted is a further illustration of an example embodiment of the electronic control unit (ECU) 40 depicted in FIG. 4. One having ordinary skill in the art should appreciate in the context of the present disclosure that the example electronic control unit 40 is merely illustrative of one embodiment, and that some embodiments of electronic control units may comprise fewer or additional components, and/or some of the functionality associated with the various components depicted in FIG. 5 may be combined, or further distributed among additional modules or controllers, in some embodiments. The electronic control unit 40 is depicted in this example as a computer system, but may be embodied as a programmable logic controller (PLC), field programmable gate array (FPGA), application specific integrated circuit (ASIC), among other devices. It should be appreciated that certain well-known components of computer systems are omitted here to avoid obfuscating relevant features of the electronic control unit 40. In one embodiment, the electronic control unit 40 comprises one or more processors, such as processor 60, input/output (I/O) interface(s) 62, which in one embodiment is coupled to a user interface (UI) 64, and memory 66, all coupled to one or more data busses, such as data bus 68. In some embodiments, the user interface 64 may be coupled directly to the data bus 68. The memory 66 may include any one or a combination of volatile memory elements (e.g., random-access memory RAM, such as DRAM, and SRAM, etc.) and nonvolatile memory elements (e.g., ROM, hard drive, tape, CDROM, etc.). The memory 66 may store a native operating system, one or more native applications, emulation systems, or emulated applications for any of a variety of operating systems and/or emulated hardware platforms, emulated operating systems, etc. In some embodiments, a separate storage device may be coupled to the data bus 68, such as a persistent memory (e.g., optical, magnetic, and/or semiconductor memory and associated drives).

In the embodiment depicted in FIG. 5, and with reference also to FIG. 4, the memory 66 comprises an operating system 70 and application software 72. It should be appreciated by one having ordinary skill in the art in the context of the present disclosure that the electronic control unit 40 may embody other mechanisms of control in some embodiments, such as a more rudimentary form of control where the operating system and/or application software are omitted. The application software 72 receives input (e.g., current position information) from the sensors 30, 32 (FIG. 4) and operator input (e.g., lift arm adjustment instructions entered via the user interface 64) via I/O interfaces 62, and provides one or more signals (sent wirelessly and/or over a wired medium) via I/O interfaces 62 to either or both the valve actuators 48, 50 (FIG. 4) to actuate either or both of the control valves 42, 44 (FIG. 4), respectively, to cause a change in spool position, and hence, a change in hydraulic fluid flow through the actuators 20 (FIG. 4). The application software 72 uses the sensor input to determine (e.g., indirectly) the height of each of the lift arms 16, and uses the operator input entered at the user interface 64 to provide signals to the valve actuators 48, 50 to change the flow through the respective actuators 20A, 20B, thus achieving the requested height of one or a combination of the lift arms 16 through the stroke change of the actuators 20A and/or 20B. The sensor input may include information pertaining to a position of the pistons (e.g., piston 54 of FIG. 4 for actuator 20A) relative to the respective cylinder barrel (or relative to another datum point in some embodiments). For instance, the application software 72 receives the input from the sensors 30, 32 and associates the sensor input to the current height of the lift arms 16. For instance, the association may involve the use of a look-up table (LUT) stored in memory 66 that associates stroke position for each actuator 20 to a respective height of the respective lift arms 16. The application software 72 compares the requested height to the current height to determine whether and/or how much to stroke the actuators 20 to achieve the requested height of the lift arms 16. The application software 72 and processor 60 (or additional circuitry in some embodiments) may provide, or facilitate, further processing of the sensor inputs, including filtering, amplifcation, analog-to-digital and digital-to-analog processing, among other processing.

Execution of the application software 72 may be implemented by the processor 60 under the management and/or control of the operating system 70. In some embodiments, the operating system 70 may be omitted and a more rudimentary manner of control implemented. The processor 60 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the electronic control unit 40.

The I/O interfaces 62 comprises hardware and/or software to provide one or more interfaces to a network within the work machine 10 and/or implement 12 (FIG. 1), such as one or more CAN busses, and in some embodiments, other networks. In other words, the I/O interfaces 62 may comprise any number of interfaces for the input and output of signals (e.g., analog or digital data) for conveyance of information (e.g., data) over such local networks. For instance, as described above, the I/O interfaces 62 enable communication between the electronic control unit 40, the sensors 30, 32, the valve actuators 48, 50, and the user interface 64. The I/O interfaces 62 may further comprise a radio and/or cellular modem that enable wireless connection to a respective one (or more) local or remotely located computing devices or components over a network (e.g., wireless or mixed wireless and wired networks). For instance, the I/O interfaces 62 may cooperate with browser software and/or other software of the electronic control unit 40 (or other controller) to communicate with a server device over cellular links, among other telephony communication mechanisms and radio frequency communications. For such wireless communication functionality, the I/O interfaces 62 may comprise MAC and PHY components (e.g., radio circuitry, including transceivers, antennas, etc.), as should be appreciated by one having ordinary skill in the art.

The user interface (UI) 64 may include one or more of a keyboard, mouse, microphone, touch-type display device, joystick, steering wheel, FNR lever, or other devices (e.g., switches, immersive head set, etc.) that enable input and/or output by an operator (e.g., to respond to indications presented on the screen or aurally presented, to enable input by the operator based on observation of the field conditions, to enter a requested height for each lift arm of the pair of lift arms 16, etc.) and/or enable monitoring of machine operations. For instance, an operator may enter commands via the user interface 64 to prompt operations (e.g., independent lift arm height change) performed by the hitch system 14. In some embodiments, the sensor feedback may be presented on a display screen in the form of lift arm height (e.g., as measurement data) and/or graphically, such as a graphical representation or live image (e.g., video) feed of the hitch system 14 with overlaid height measurements for each lift arm 16. These and/or other mechanisms for presenting feedback of the current position of each of the lift arms 16 are contemplated to be within the scope of the disclosure.

When certain embodiments of the electronic control unit 40 are implemented at least in part with software (including firmware), as depicted in FIG. 5, it should be noted that the software (e.g., such as the application software 72) can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the electronic control unit 40 are implemented at least in part with hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), relays, contactors, etc.

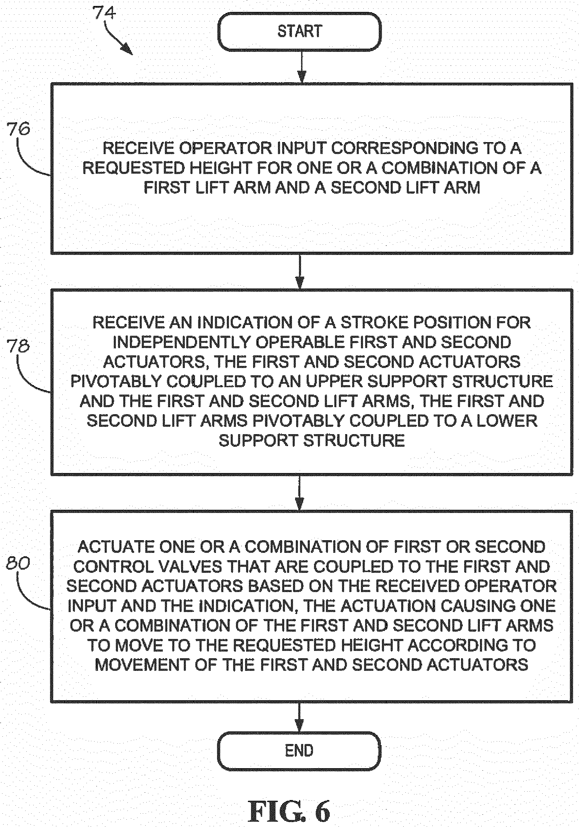

In view of the above description, it should be appreciated that one embodiment of an example hitch control method 74, as depicted in FIG. 6, comprises: receiving operator input corresponding to a requested height for one or a combination of a first lift arm and a second lift arm (76); receiving an indication of a stroke position for independently operable first and second actuators, the first and second actuators pivotably coupled to an upper support structure and the first and second lift arms, the first and second lift arms pivotably coupled to a lower support structure (78); and actuating one or a combination of first or second control valves that are coupled to the first and second actuators based on the received operator input and the indication, the actuation causing one or a combination of the first and second lift arms to move to the requested height according to movement of the first and second actuators (80).

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein. Although the control systems and methods have been described with reference to the example embodiments illustrated in the attached drawing figures, it is noted that equivalents may be employed and substitutions made herein without departing from the scope of the disclosure as protected by the following claims.

## Claims

1. A hitch system, comprising:
an upper support structure comprising a first pivot mount at one end of the upper support structure and a second pivot mount at the other end of the upper support structure;
a lower structural assembly comprising a base having a third pivot mount at one end of the base and a fourth pivot mount at the other end of the base, the lower structural assembly further comprising first and second lift arms pivotably connected respectively to the third and fourth pivot mounts; and
first and second actuators each comprising a retractable member and independently operable, the first actuator pivotably connected at one end of the first actuator to the first pivot mount and pivotably connected at the other end of the first actuator to the first lift arm, the second actuator pivotably connected at one end of the second actuator to the second pivot mount and pivotably connected at the other end of the second actuator to the second lift arm.

2. The hitch system of claim 1, wherein the first and second actuators each comprise an electrically actuated cylinder.

3. The hitch system of claim 1, wherein the first and second actuators each comprise a fluid actuated cylinder.

4. The hitch system of claim 1, wherein the first and second actuators each comprise a double-acting cylinder.

5. The hitch system of claim 1, further comprising a center link to supplement movement of the first and second lift arms.

6. The hitch system of claim 1, wherein the lower structural assembly comprises a draft arm assembly.

7. The hitch system of claim 1, wherein the retractable member comprises a piston or screw.

8. The hitch system of claim 1, further comprising plural sensors coupled to the first and second lift arms.

9. The hitch system of claim 1, further comprising plural sensors coupled to the first and second actuators.

10. A hitch control system, comprising:
an upper support structure;
first and second actuators each comprising a retractable member and independently operable, the first and second actuators pivotably coupled to the upper support structure;
a lower support structure;
a pair of lift arms pivotably coupled to the lower support structure and the first and second actuators;
first and second sensors configured to detect a position of the respective first and second actuators;
first and second control valves coupled to the first and second actuators; and
an electronic control unit configured to receive operator input and signals from the first and second sensors and actuate one or a combination of the first and second control valves based on the operator input and the signals.

11. The hitch control system of claim 10, wherein the first and second actuators each comprise an electrically actuated cylinder.

12. The hitch control system of claim 10, wherein the first and second actuators each comprise a fluid actuated cylinder.

13. The hitch control system of claim 10, wherein the first and second actuators each comprise a double-acting cylinder.

14. The hitch control system of claim 10, further comprising a center link to supplement movement of the first and second lift arms.

15. The hitch control system of claim 10, wherein the retractable member comprises a piston or screw.

16. The hitch control system of claim 10, wherein the first and second sensors are coupled to the pair of lift arms.

17. The hitch control system of claim 10, wherein the first and second sensors are coupled to the first and second actuators.

18. The hitch control system of claim 10, wherein the electronic control unit is further configured to actuate the one or combination of the first and second control valves based on the operator input corresponding to a request to change a position of one or both lift arms of the pair of lift arms and the signals corresponding to the detected position, the detected position further associated with the position of the pair of lift arms.

19. The hitch control system of claim 10, wherein based on the actuation of the one or combination of the first and second control valves, the one or combination of the first and second control valves enables the retractable member of the one or the combination of the first and second actuators to move to a height of each lift arm of the pair of lift arms according to the operator input.

20. A hitch control method, comprising:
receiving operator input corresponding to a requested height for one or a combination of a first lift arm and a second lift arm;
receiving an indication of a stroke position for independently operable first and second actuators, the first and second actuators pivotably coupled to an upper support structure and the first and second lift arms, the first and second lift arms pivotably coupled to a lower support structure; and
actuating one or a combination of first or second control valves that are coupled to the first and second actuators based on the received operator input and the indication, the actuation causing one or a combination of the first and second lift arms to move to the requested height according to movement of the first and second actuators.
